# FASCICULE DE BREVET EUROPEEN

(11) **EP 4 296 491 B1**
(45) Date de publication et mention de la délivrance du brevet: **09.04.2025**
(21) Numéro de dépôt: 22315125.9
(22) Date de dépôt: 24.06.2022
(51) Int. Cl.: F01D 25/18, F04D 29/063, F01M 11/00, F02C 7/06

(54) **RESERVOIR D'HUILE POUR TURBOMACHINE AVEC COMPARTIMENT INFÉRIEUR AVEC CONDUIT DE SORTIE D'HUILE COMPATIBLE G NÉGATIF**
ÖLTANK FÜR EINE TURBOMASCHINE MIT UNTEREM FACH MIT EINEM NEGATIV-G-KOMPATIBLEN ÖLAUSLASSKANAL
OIL RESERVOIR FOR A TURBINE ENGINE WITH LOWER COMPARTMENT WITH NEGATIVE G COMPATIBLE OIL OUTLET DUCT

(43) Date de publication de la demande: 27.12.2023
(73) Titulaire: Safran Aero Boosters, 4041 Herstal (BE); Safran Aircraft Engines, 75015 Paris (FR)
(72) Inventeur: BOUGELET, Stephane Alain Luc Ghislain, Herstal (BE); ORIOL, Sébastien, Melun (FR)
(74) Mandataire: Ipsilon Benelux

(56) Documents cités:
- EP-A1- 1 104 742
- EP-A1- 2 801 707
- EP-A2- 2 166 196
- FR-A1- 3 010 133
- FR-A1- 3 024 497

## Description

### Domaine

L'invention se rapporte au domaine des réservoirs de turbomachine. Plus précisément, l'invention se rapporte au domaine des réservoirs d'huile utilisés pour lubrifier des composants de turbomachine, notamment comprenant une hélice non carénée à pas variable et/ou un redresseur à pas variable.

### Art antérieur

Des turbomachines d'aéronef comprenant au moins une hélice non carénée sont connues sous le terme anglais « open rotor » ou « unducted fan ». Dans cette catégorie de turbomachine, il existe celles qui ont deux hélices non carénées et contrarotatives (connues sous l'acronyme anglais UDF pour « Unducted Dual Fan ») ou celles ayant une seule hélice non carénée et un redresseur comprenant plusieurs aubes de stator (connues sous l'acronyme anglais USF pour Unducted Single Fan).

Ces turbomachines sont des turbopropulseurs qui se distinguent des turboréacteurs par l'utilisation d'une hélice à l'extérieur de la nacelle (non carénée) au lieu d'une soufflante interne.

L'hélice ou les hélices formant la partie propulsive comprennent généralement un système d'actionnement du pas des aubes de(s) l'hélice(s), également désigné par système à calage variable. Un tel système permet aux aubes de l'hélice de s'orienter selon les besoins des phases de vol de l'aéronef (décollage, croisière, atterrissage, etc.) afin d'assurer une gestion de la poussée dans tous les cas de vol de la turbomachine.

Dans le cas des turbomachines avec une seule hélice non carénée et un redresseur, ce dernier peut aussi comprendre un système à calage variable de manière à améliorer les performances de la turbomachine. Un exemple d'une telle turbomachine est divulgué par le document de brevet publié FR 3 107 319 A1.

Les systèmes à calage variables peuvent nécessiter une alimentation permanente en huile afin de permettre l'actionnement du pas des aubes et la gestion de la poussée du moteur dans tous les cas de vol de la turbomachine (nominaux et extrêmes). Dans l'état de l'art, ces systèmes sont alimentés par un circuit de lubrification principal permettant d'assurer une alimentation en huile des différents composants du moteur (paliers, réducteur, etc.) afin d'assurer des fonctions de lubrification et/ou de refroidissement. Ce circuit est alimenté en huile par un réservoir principal de la turbomachine comprenant entre autres une entrée d'huile en partie supérieure et une sortie en partie inférieure, suivant une direction de montage verticale, ce qui permet une alimentation en huile lors des attitudes de vol sous pesanteur ou facteur de charge positif (G positif).

Si de tels réservoirs donnent entière satisfaction lorsque l'aéronef effectue des vols dans des cas de vol en G positif, en revanche, lorsqu'il s'agit de phases de vol sous facteur de charge nul ou négatif (G nul ou G négatif), i.e., en cas de manœuvre de l'aéronef ou en cas de bourrasque de vent ascendante, ces réservoirs n'assurent plus complétement l'alimentation en huile du système d'actionnement du pas.

En effet, les phases de vol en G nul ou G négatif sont des phases de vol temporaires (durent généralement moins de 30 secondes pour les avions civils) pour lesquelles l'aéronef est soumis à des accélérations négatives, par exemple, lorsqu'il subit de brusques changements d'altitude.

A cet effet, l'huile contenue dans le réservoir principal est alors renversée, l'huile ne se situe plus aux abords de la sortie en partie inférieure, ce qui génère une coupure dans l'alimentation en huile, entrainant un passage d'air vers le(s) circuit(s) à calage variable, engendrant ainsi des conséquences nuisibles sur le fonctionnement de la turbomachine pouvant induire une perte de contrôle de l'aéronef.

Il est possible d'utiliser des réservoirs tels que ceux qui équipent des avions de chasse, où les phases de vol en G négatif sont fréquentes et indispensables. Cependant, ces réservoirs sont pressurisés, ce qui implique un surpoids important, ainsi qu'un surcoût élevé, incompatible avec les turbomachines comprenant au moins une hélice non carénée.

Par ailleurs, une solution connue permettant d'éviter de nuire au circuit d'actionnement du pas des hélices consiste en cas de G négatif, d'assurer l'alimentation en huile au moyen d'un autre système que le réservoir d'huile principal de la turbomachine. Toutefois, une telle solution implique un encombrement et une masse importants au sein de la turbomachine et une gestion complexe de l'acheminement de l'huile vers le système à calage variable.

Le document de brevet publié FR 3 010 133 A1 divulgue un réservoir comprenant une cloison inclinée munie à ses extrémités d'orifices traversant pour une alimentation continue de la turbomachine. Le document EP 2 166 196 A2 propose un système de lubrification ayant un réservoir principal et un réservoir auxiliaire à l'intérieur et au fond du réservoir principal.

Cependant, les solutions proposées par les documents présentent une marge d'amélioration afin de permettre, par exemple, un plus grand volume d'huile disponible pour alimenter les composants de la turbomachine en cas de vol en G négatif, et sans entraver ledit volume lors du retour en G positif.

### Résumé de l'invention

### Problème technique

La présente invention a pour objectif de pallier au moins un des inconvénients de l'état de la technique susmentionné. Plus particulièrement, l'invention a pour objectif de proposer un réservoir d'huile dont la conception est telle qu'elle permet à l'aéronef d'effectuer, en toute sécurité, des phases temporaires de vol en pesanteur négative, sans augmenter le poids et le coût des réservoirs.

### Solution technique

L'invention a trait à un réservoir d'huile pour turbomachine, comprenant :
- une enceinte pour l'huile, présentant un axe principal, et avec des parois délimitant un premier compartiment et un deuxième compartiment séparé du premier compartiment par une paroi de séparation ;
- un canal s'étendant dans le premier compartiment, depuis la paroi de séparation ;
- une arrivée d'huile mélangée à de l'air, disposée sur le deuxième compartiment ;
- un départ d'huile comprenant un conduit s'étendant et débouchant dans le premier compartiment ; remarquable en ce que le canal s'étend à l'intérieur du conduit, de manière à assurer un gavage en huile du conduit et ainsi conserver une alimentation en huile du conduit lors de phases de vol en pesanteur nulle ou négative.

Selon un mode avantageux de l'invention, la paroi de séparation est inclinée par rapport à une perpendiculaire à l'axe principal, vers le canal de manière à guider l'huile vers ledit canal.

Selon un mode avantageux de l'invention, la paroi de séparation présente avec la perpendiculaire à l'axe principal un angle d'inclinaison (α) compris entre 10° et 60°, plus préférentiellement compris entre 30° et 50°.

Selon un mode avantageux de l'invention, le conduit comprend une partie distale parallèle à la paroi de séparation ou inclinée par rapport à ladite paroi de séparation de moins de 20°.

Selon un mode avantageux de l'invention, le canal est en position centrale de la paroi de séparation et ladite paroi de séparation est en forme d'entonnoir.

Selon un mode avantageux de l'invention, la partie distale du conduit est en forme d'entonnoir correspondant à la forme d'entonnoir de la paroi de séparation.

Selon un mode avantageux de l'invention, le conduit comprend une partie proximale sensiblement parallèle à l'axe principal.

Selon un mode avantageux de l'invention, la partie distale du conduit présente au moins 40% d'une étendue totale dudit conduit.

Selon un mode avantageux de l'invention, le conduit présente une section correspondante à au moins 1,2 fois une section du canal.

Selon un mode avantageux de l'invention, le canal comprend une extrémité distale formant avec la partie distale du conduit un volume tampon à l'intérieur dudit conduit, ladite extrémité distale du canal et la partie distale du conduit forment un deuxième volume à l'extérieur du conduit, et la partie distale du conduit forme avec la paroi de séparation un premier volume, ledit premier volume étant plus petit que le deuxième volume dans le premier compartiment.

Selon un mode avantageux de l'invention, la paroi de séparation et/ou l'extrémité distale du canal comprend, en outre, au moins une vanne et/ou au moins un clapet anti-retour sensible(nt) aux changements de la pesanteur.

L'invention a également trait à une turbomachine comprenant :
- une hélice non carénée propulsant un flux d'air entrant, ladite hélice comprenant un système à calage variable permettant d'actionner le pas des aubes de l'hélice ;
- un réservoir d'huile pour la lubrification de composants de la turbomachine ;
remarquable en ce que ledit réservoir est selon l'un des modes avantageux de l'invention susmentionnés.

Selon un mode avantageux de l'invention, l'arrivée d'huile vers le deuxième compartiment et une sortie d'huile supérieure forment avec le deuxième compartiment un premier circuit fermé destiné à la lubrification et/ou au refroidissement des composants du moteur de la turbomachine.

Selon un mode avantageux de l'invention, le système à calage variable est un premier système à calage variable, et ladite turbomachine comprend, en outre, un redresseur comprenant une pluralité d'aubes statoriques s'étendant depuis un carter fixe, ledit redresseur comprenant un deuxième système à calage variable, et en ce que le départ d'huile est hydrauliquement relié à un deuxième circuit fermé comprenant des composants du premier système et/ou du deuxième système à calage variable de la turbomachine.

### Avantages de l'invention

L'invention est particulièrement avantageuse en ce qu'elle permet de garantir une alimentation en huile des différents composants de la turbomachine, dont notamment le(s) système(s) à calage variable, et cela tout en assurant que ce(s) dernier(s) soi(en)t alimenté(s) en huile pure sans aucune présence d'air et sans interruption d'alimentation lors des phases de vol en gravité nulle et en gravité négative. Ainsi, la commande hydraulique du système d'actionnement du pas de l'hélice de la turbomachine peut rester opérationnelle lors de toutes les phases de vol de l'aéronef.

Avantageusement, la simplicité de l'architecture du réservoir d'huile de la présente invention lui permet d'assurer un fonctionnement fiable. De plus, le réservoir est compact, ce qui permet de réduire l'encombrement global et la masse de la turbomachine.

### Description des dessins

[Fig 1] est une vue schématique en coupe axiale d'une turbomachine d'aéronef selon l'invention ;
[Fig 2] est d'un schéma des différents circuits fermés reliés au réservoir d'huile de l'invention ;
[Fig 3] représente une vue en coupe du réservoir d'huile selon l'invention ;
[Fig 4] représente une vue en coupe du réservoir d'huile de la figure 3 lors d'une phase de vol de l'aéronef en pesanteur positive ;
[Fig 5] représente une vue en coupe du réservoir d'huile de la figure 3 lors d'une phase de vol de l'aéronef en pesanteur négative.

### Description détaillée

Les figures montrent les éléments de manière schématique et ne sont pas représentées à l'échelle. En particulier, certaines dimensions sont agrandies pour faciliter la lecture des figures.

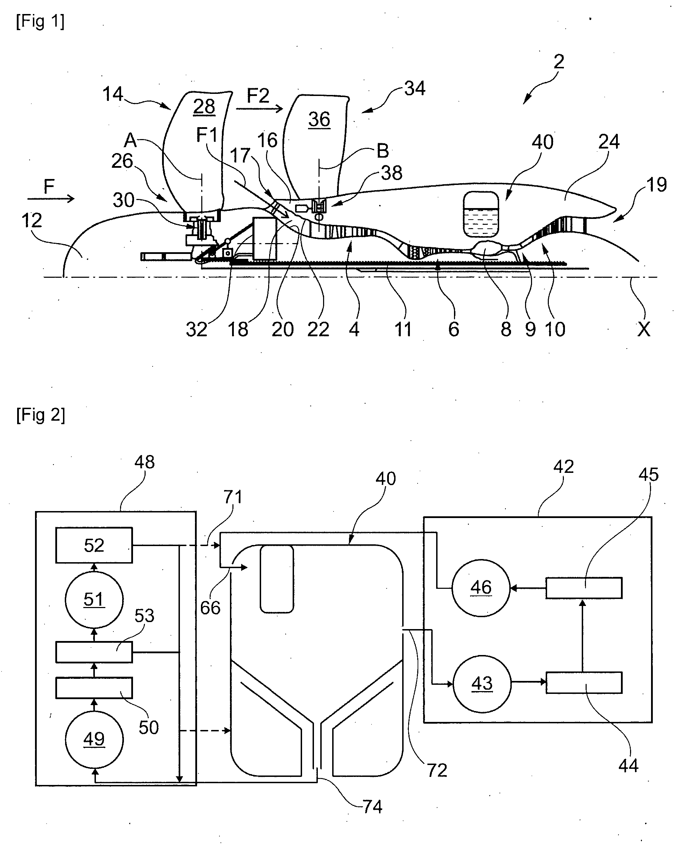

La figure 1 illustre schématiquement une vue en coupe axiale d'une turbomachine d'aéronef selon l'invention. Il s'agit d'une turbomachine connue sous l'expression anglaise « open rotor » ou « unducted fan », et particulièrement d'une turbomachine USF « Unducted Single Fan ».

Dans la description qui va suivre, les termes « interne » et « externe » renvoient à un positionnement par rapport à l'axe de rotation d'une turbomachine, et ici suivant l'axe longitudinal X (et même de gauche à droite sur la figure 1). Les termes « radial », « interne » et « externe » sont définis par rapport à une direction radiale perpendiculaire à l'axe longitudinal X. L'amont et l'aval sont en référence au sens d'écoulement d'un flux dans la turbomachine. Par ailleurs, les éléments illustrés dans les figures qui sont identiques ou sensiblement identiques et/ou avec les mêmes fonctions sont représentés par les mêmes références numériques.

La turbomachine 2 comprend typiquement d'amont en aval, un premier niveau de compression, dit compresseur basse pression 4, ainsi qu'un deuxième niveau de compression, dit compresseur haute pression 6, une chambre de combustion 8 suivie d'une turbine haute pression 9 et d'une turbine basse pression 10.

La turbomachine 2 comprend une hélice 14 agencée en amont d'un bec de séparation 16 porté par un carter externe 24 et apte à séparer le flux d'air F en un flux secondaire F2 et un flux primaire F1 circulant dans une veine primaire 18 et traversant les différents niveaux susmentionnés de la turbomachine 2.

La veine primaire 18 est délimitée radialement par une paroi radialement interne 20 et une paroi radialement externe 22. La paroi radialement interne 20 est portée par le carter interne 12. La paroi radialement externe 22 est portée par le carter externe 24. Le flux d'air primaire F1 entre dans la veine primaire 18 par une entrée d'air annulaire 17 et s'en échappe par une tuyère primaire 19 qui est disposée en aval de ladite veine primaire 18. Le flux primaire F1 peut être accéléré par la tuyère primaire 19 de sorte à générer une réaction de poussée nécessaire au vol de l'aéronef.

La turbomachine comprend un carter rotatif 26 centré sur l'axe longitudinal X et tournant autour de ce dernier. Le carter rotatif 26 porte une couronne de pales 28 mobiles formant l'hélice 14. Le carter rotatif 26 est monté mobile par rapport au carter interne 12 qui le porte.

Le flux d'air F qui entre dans la turbomachine traverse les pales 28 de l'hélice 14 pour former le flux d'air secondaire F2. Ce dernier circule autour du carter externe 24. Chaque pale 28 de l'hélice 14 comprend un pied 30 et une partie aérodynamique s'étendant radialement vers l'extérieur depuis le pied 30, ce dernier comprenant un pivot. En effet, le pied 30 est monté pivotant autour d'un axe A (perpendiculaire à X) permettant ainsi le pivotement des pales 28 de l'hélice 14. Ce pivotement est géré par un premier système à calage variable de la turbomachine 2.

Le compresseur basse pression 4 et la turbine basse pression 10 sont reliés mécaniquement par un arbre basse pression 11, ce dernier entraîne l'hélice 14 par l'intermédiaire d'un réducteur 32, l'hélice 14 comprime l'air à l'extérieur du carter externe 24 et fournit la majeure partie de la poussée de la turbomachine 2. Le réducteur 32 peut être de type à train planétaire.

La turbomachine 2 comprend un redresseur 34 traversé par le flux secondaire F2, ce dernier étant une partie du flux d'air F propulsée radialement extérieurement à l'axe longitudinal X. Le redresseur 34 comprend une pluralités d'aubes de stator 36 (ou aubes statoriques ou aubes fixes) connues sous l'acronyme anglais «OGV» (Outlet Guide Vane). Les aubes de stator 36 sont réparties régulièrement autour de l'axe longitudinal X et s'étendent radialement dans le flux d'air secondaire F2. Les aubes de stator 36 sont portées par une structure fixe solidaire du carter externe 24. En particulier, chaque aube de stator 36 s'étend radialement depuis un pied 38, ce dernier est monté pivotant autour d'un axe B (perpendiculaire à X) permettant le pivotement des aubes statoriques 36 du redresseur 34. Ce pivotent est géré par un deuxième système à calage variable de la turbomachine 2.

La turbomachine 2 comprend, en outre, un réservoir d'huile 40 pour la lubrification et/ou le refroidissement des composants de ladite turbomachine 2. A cet effet, le réservoir d'huile 40 est le réservoir d'huile principal de la turbomachine 2, et permet en outre, d'alimenter en huile les premier et deuxième systèmes à calage variable de la turbomachine 2. De préférence, le réservoir 40 est agencé au droit du carter externe 24. L'architecture et le fonctionnement du réservoir d'huile 40 seront détaillés plus loin dans la présente description.

La figure 2 est un schéma des différents circuits fermés reliés au réservoir d'huile de l'invention.

En référence à la figure 2, le réservoir d'huile 40 est relié hydrauliquement à un circuit de lubrification et refroidissement 42 du moteur de la turbomachine, il s'agit d'un premier circuit fermé 42 de la turbomachine. Ce circuit comprend une pompe d'alimentation 43, des échangeurs de chaleur 44 et des enceintes de lubrification 45, ces dernières assurent la lubrification des roulements, des réducteurs et des paliers et permettent de garantir l'étanchéité air/huile du moteur.

Le circuit 42 comprend, en outre, au moins une pompe de récupération 46 configurée pour récupérer l'huile des enceintes de lubrification 45 et les diriger vers le réservoir d'huile 40. Le premier circuit fermé 42 peut correspondre à un groupe de lubrification de la turbomachine.

Le réservoir d'huile 40 est également relié hydrauliquement à un circuit 48 d'actionnement du pas des aubes de l'hélice. A cet effet, le circuit 48 permet d'alimenter en huile le premier système à calage variable de l'hélice 14 de la figure 1, il s'agit d'un deuxième circuit fermé 48 de la turbomachine.

Le circuit d'actionnement du pas 48 peut aussi alimenter en huile le deuxième système à calage variable du redresseur 34 de la figure 1, indépendamment ou en combinaison avec le premier système à calage variable.

Le circuit d'actionnement du pas 48 peut assurer des fonctions de lubrification et/ou de refroidissement du système à calage variable. A cet égard, le circuit 48 comprend une pompe de gavage 49 récupérant l'huile d'une partie inférieure du réservoir 40 pour diriger celle-ci vers un échangeur de chaleur 50.

Préférentiellement, le circuit d'actionnement du pas 48 est aussi configuré pour commander hydrauliquement le système à calage variable en plus des fonctions de lubrification et de refroidissement. A cet égard, le circuit 48 comprend une pompe d'actionnement du pas 51 pouvant hydrauliquement commander un système d'actionnement du pas 52, ce dernier peut correspondre au premier et/ou au deuxième système à calage variable de la turbomachine.

Dans cette configuration, la pompe d'actionnement du pas 51 permet d'actionner un actuateur hydraulique entraînant le pivotement des pieds 30 et 38 de la figure 1.

Préférentiellement, le circuit d'actionnement du pas 48 comprend une valve de by-pass 53 permettant le choix entre une fonction de refroidissement ou d'actionnement du pas du système à calage variable.

Avantageusement, il existe une connexion 71 entre le circuit de commande hydraulique 48 et le circuit de lubrification 42 pour récolter des éventuelles fuites des vérins d'actuation des pas d'hélice et de réinjecter cette huile dans le réservoir 40 à partir d'une entrée 66.

Le circuit 48 peut comprendre un retour d'huile (illustré en pointillés) vers le réservoir ou ledit retour d'huile peut être directement relié en amont de la pompe de gavage 49.

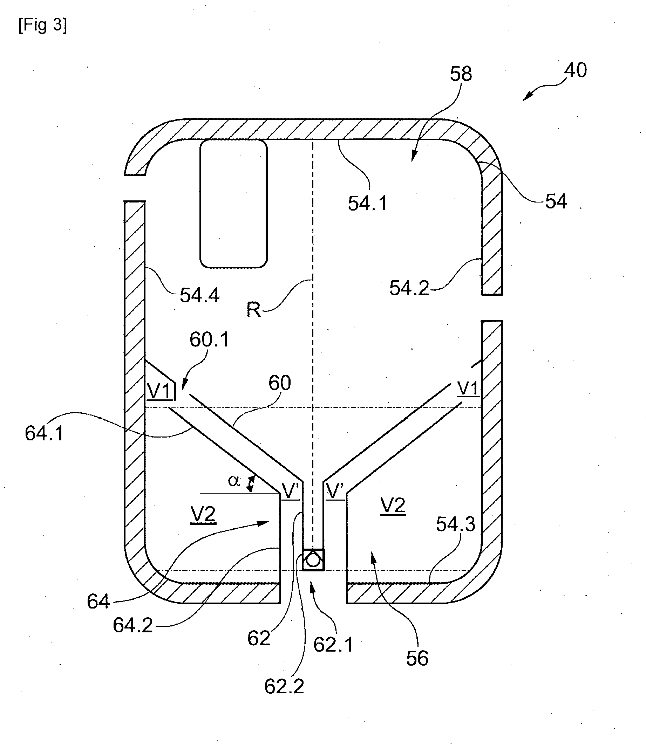

La figure 3 représente une vue en coupe du réservoir d'huile 40 comprenant une enceinte pour l'huile 54 (huile non représentée ici pour mieux simplifier l'illustration), présentant un axe principal R correspondant préférentiellement une direction principale R destinée à être orientée verticalement en position de montage dans la turbomachine 2 de la figure 1.

L'enceinte 54 formée par les parois 54.1, 54.2, 54.3 et 54.4 délimitant un premier compartiment 56 et un deuxième compartiment 58 séparé du premier compartiment 56 par une paroi de séparation 60, cette dernière comprend un canal 62 s'étendant dans le premier compartiment 56 et précisément dans un conduit 64 formant un départ d'huile du premier compartiment.

De préférence, l'axe principal R correspond à la direction principale de l'étendue de l'enceinte 54. A cet effet, l'axe principal R définit le sens de la plus grande dimension de ladite enceinte 54.

Préférentiellement, l'axe principal R de l'enceinte 54 suit la direction de la pesanteur (perpendiculaire au plan horizontal). Toutefois, l'axe principal R peut être incliné par rapport à la direction de la pesanteur d'un angle pouvant aller jusqu'à 45° ou dépasser 45° jusqu'à former un angle inférieur à 90°.

Suivant le sens de la pesanteur (effort perpendiculaire à l'horizontal et dirigé vers le bas), le deuxième compartiment 58 est au-dessus du premier compartiment 56. Dans cette configuration, le premier compartiment 56 est un compartiment inférieur 56, et le deuxième compartiment 58 est un compartiment supérieur 58.

Alternativement, l'enceinte 54 du réservoir 40 peut avoir une forme sensiblement oblongue et/ou incurvée. Préférentiellement, l'enceinte 54 comprend une forme sensiblement cylindrique.

L'enceinte 54 peut comprendre un baffle perforé (non illustré) agencé au-dessus de la paroi de séparation 60 et permettant de filtrer et purifier l'huile avant que l'huile atteigne le compartiment inférieur 56.

Dans cette configuration, le conduit 64 s'étend à partir d'un fond 54.3 de l'enceinte 54 et débouche dans le compartiment inférieur 56.

Préférentiellement, le canal 62 est en position centrale par rapport à la paroi de séparation 60, et le conduit 64 est en position centrale par rapport au fond 54.3.

La paroi de séparation 60 est de préférence inclinée par rapport à une perpendiculaire à la direction principale R d'un angle d'inclinaison α compris entre 10° et 60°, plus préférentiellement compris entre 30° et 50°, et encore plus préférentiellement, l'angle d'inclinaison α est égal à 45°. A cet effet, la paroi de séparation 60 est en forme d'entonnoir.

Avantageusement, l'inclinaison de la paroi de séparation 60 permet de mieux guider l'huile vers le canal 62.

Préférentiellement, le conduit 64 comprend une partie distale 64.1 parallèle à la paroi de séparation 60 et formant également un entonnoir correspondant à la forme d'entonnoir de la paroi de séparation 60, mais la partie distale 64.1 peut être inclinée par rapport à ladite paroi de séparation 60 d'un angle inférieur à 20°.

La partie distale 64.1 du conduit 64 présente plus de 20% d'une étendue totale dudit conduit 64, et moins de 70% de ladite étendue totale. Préférentiellement, la partie distale 64.1 s'étend sur au moins 40% de l'étendue totale dudit conduit 64.

Le conduit 64 comprend une partie proximale 64.2 étant sensiblement parallèle à la direction principale R. A cet effet, le canal 62 est coaxial au conduit 64.

Le canal 62 comprend une extrémité distale 62.1 pouvant comprendre une vanne ou un clapet anti-retour 62.2 sensible aux changements de la pesanteur. En effet, en cas d'une phase de vol de l'aéronef en pesanteur positive (G positif), le clapet anti-retour 62.2 est apte à laisser le passage de l'huile sortant du canal 62, mais en cas d'une phase de vol de l'aéronef en pesanteur nulle ou négative (G0 ou G négatif), le clapet 62.2 ne permet aucun passage d'huile.

Similairement, la paroi de séparation 60 peut comprendre au moins une vanne et/ou au moins un clapet 60.1 sensible aux changements de la pesanteur, ce clapet 60.1 et/ou le clapet anti-retour 62.2 du canal 62 peuvent avantageusement permettre, respectivement, d'accélérer le retour de l'huile dans le compartiment inférieur 56 lors d'une phase transitoire du G négatif vers le G positif, et de limiter la quantité d'huile allant vers le compartiment supérieur 58 lors d'une autre phase transitoire du G positif vers le G négatif.

De préférence, la paroi de séparation 60 comprend au moins un évent 60.2 apte à évacuer l'air pouvant être compris dans le compartiment inférieur 56 lors de la phase transitoire du G négatif vers le G positif. Avantageusement, l'au moins un évent 60.2 est idéalement placé (à l'extrémité latérale de la paroi de séparation 60) de manière à permettre d'accélérer le retour de l'huile dans le compartiment inférieur 56.

Par ailleurs, l'extrémité distale 62.1 délimite un volume tampon V' à l'intérieur du conduit 64 avec sa partie distale 64.1. Le volume tampon V' étant compris entre les lignes illustrées en pointillés, ces lignes sont perpendiculaires à la direction principale. Il est à noter que la ligne basse en pointillés (adjacente au fond 54.3) s'arrête au niveau de l'extrémité distale 62.1 du canal 62 car en pesanteur négative c'est à ce niveau-là que l'huile s'arrête et ne passe plus à travers le canal 62 pour arriver au compartiment supérieur 58.

Le volume tampon V' est en partie dépendant de la différence entre les sections du canal 62 et du conduit 64. A cet effet, plus la section du conduit 64 est grande par rapport au canal 62, et plus le volume tampon V' sera grand.

A cet égard, le conduit 64 présente préférentiellement une section correspondante à au moins 1,2 fois la section du canal 62 et/ou au plus 3 fois la section dudit canal 62.

Avantageusement, la forme en entonnoir de la partie distale 64.1 du conduit 64 qui est parallèle à la paroi de séparation 60 permet à l'huile du volume tampon V' d'être guidée de manière homogène vers le bas, accélérant ainsi sa sortie du compartiment inférieur 56.

L'extrémité distale 62.1 du canal 62 délimite également un deuxième volume V2 avec la partie distale 64.1 du conduit 64, ce deuxième volume V2 étant dans le compartiment inférieur 56 et à l'extérieur du conduit 64. Le volume V2 correspond au volume d'huile pouvant être consommé entièrement lors d'une phase en G négatif avant l'épuisement de l'huile alimentant le deuxième circuit fermé.

La partie distale 64.1 du conduit 64 délimite avec la paroi de séparation 60 un premier volume V1 à l'intérieur du compartiment inférieur 56.

Dans cette configuration, il est préférable que le deuxième volume V2 soit plus important que le premier volume V1, afin de sécuriser une quantité maximale d'huile dans le compartiment inférieur 56 afin d'alimenter sans interruption les systèmes à calage variable de la turbomachine.

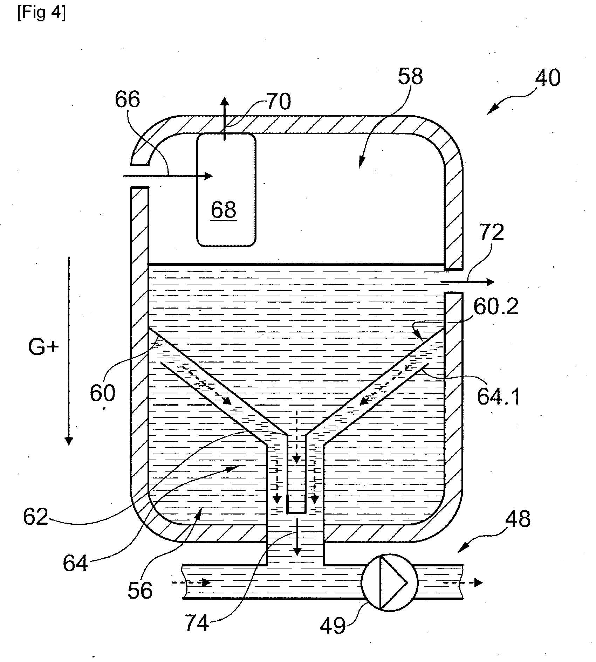

Figure 4 représente une vue en coupe du réservoir d'huile 40 de la figure 3 lors d'une phase de vol de l'aéronef en G positif. A cet effet, G+ fera référence à une pesanteur positive et G- à une pesanteur négative.

Il est à noter que le réservoir 40 est apte à assurer une alimentation constante en huile pure lors de phases de vol en G-, et chacune des phases en G- dure entre une fraction de seconde et 45 secondes. Avantageusement, le réservoir 40 peut être dimensionné de manière à assurer une alimentation constante en huile même au-delà des 45 secondes.

A cet égard, le réservoir d'huile 40 comprend, une arrivée d'huile 66 mélangée à de l'air dirigée vers le compartiment supérieur 58, et précisément vers un dispositif désaérateur d'huile 68, permettant d'évacuer l'air 70 pouvant être mélangé avec l'huile. L'arrivée d'huile provient de préférence de l'au moins une pompe de récupération 46 de la figure 2.

Le réservoir 40 comprend en outre une sortie d'huile supérieure 72 formant avec l'arrivée d'huile 66 et le compartiment supérieur 58 le premier circuit fermé 42 de la figure 2.

Préférentiellement, la sortie d'huile supérieure 72 est proche de la paroi de séparation 60 de manière à conserver l'alimentation de ladite sortie 72 en toutes circonstances, notamment lors d'un retour vers le G+ après un évènement G-.

Le réservoir 40 comprend également un départ d'huile 74 comprenant le conduit 64. Dans cette configuration, l'huile contenue dans le compartiment supérieur 58 passe directement vers le deuxième circuit fermé 48 (dont une portion étant partiellement illustrée). A cet effet, la pompe de gavage 49 aspire l'huile de façon continue, les flèches en pointillés illustrent les mouvements de l'huile.

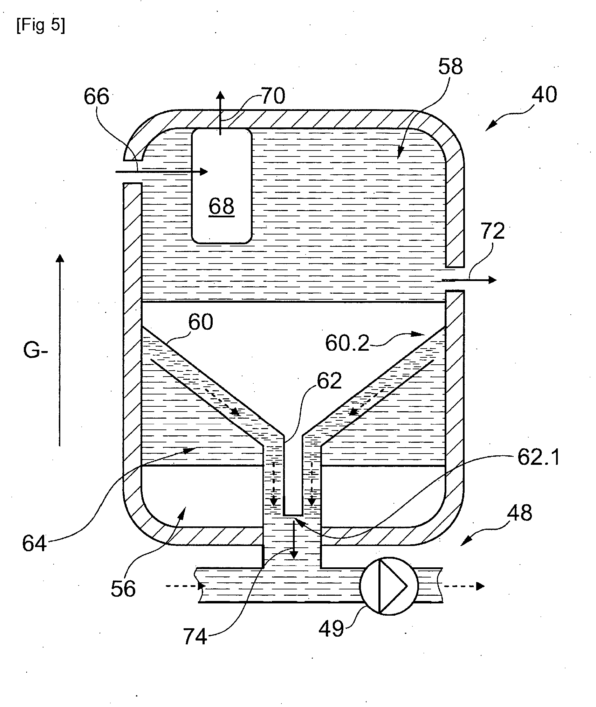

Figure 5 représente une vue en coupe du réservoir d'huile 40 de la figure 3 lors d'une phase de vol de l'aéronef en G négatif G-. Ici le volume tampon V' permet à la pompe de gavage 49 d'aspirer directement l'huile contenue dans ledit volume tampon V' dès le passage du G+ au G-. Cela permet d'assurer une alimentation du deuxième circuit fermé 48 sans interruption.

En cas d'une consommation totale de l'huile contenue dans le volume tampon V', l'alimentation peut être assurée par l'huile contenue dans le volume V2.

L'extrémité distale 62.1 est dépourvue dans la figure 5 de clapet anti-retour. En effet, l'agencement de ce dernier est optionnel et permet avantageusement de minimiser le retour de l'huile vers le compartiment supérieur au début de l'évènement G-. L'air n'est pas apte à atteindre la pompe de gavage 49 car l'aspiration de l'huile est continue. A cet effet, une zone de blocage de l'air se crée au niveau de l'extrémité distale 62.1 lors de la phase G-.

De manière avantageuse, la turbomachine de l'invention est capable d'assurer un fonctionnement continu et sécurisé de ses systèmes à calage variable grâce au réservoir principal d'huile permettant d'assurer un gavage en huile afin d'alimenter de tels systèmes en huile pure sans aucune présence d'air et sans interruption d'alimentation lors des phases de vol en pesanteur nulle ou négative.

## Revendications

1. Réservoir d'huile (40) pour turbomachine (2), comprenant :
- une enceinte (54) pour l'huile, présentant un axe principal (R), et avec des parois (54.1, 54.2, 54.3, 54.4) délimitant un premier compartiment (56) et un deuxième compartiment (58) séparé du premier compartiment (56) par une paroi de séparation (60) ;
- un canal (62) s'étendant dans le premier compartiment (56), depuis la paroi de séparation (60) ;
- une arrivée d'huile (66) mélangée à de l'air, disposée sur le deuxième compartiment (58) ;
- un départ d'huile (74) comprenant un conduit (64) s'étendant et débouchant dans le premier compartiment (56) ;
**caractérisé en ce que** le canal (62) s'étend à l'intérieur du conduit (64), de manière à assurer un gavage en huile du conduit (64) et ainsi conserver une alimentation en huile du conduit (64) lors de phases de vol en pesanteur nulle ou négative.

2. Réservoir d'huile (40) selon la revendication 1, dans lequel la paroi de séparation (60) est inclinée par rapport à une perpendiculaire à l'axe principal (R), vers le canal (62) de manière à guider l'huile vers ledit canal (62).

3. Réservoir d'huile (40) selon la revendication 2, dans lequel la paroi de séparation (60) présente avec la perpendiculaire à l'axe principal (R) un angle d'inclinaison (α) compris entre 10° et 60°, plus préférentiellement compris entre 30° et 50°.

4. Réservoir d'huile (40) selon les revendications 2 et 3, dans lequel le conduit (64) comprend une partie distale (64.1) parallèle à la paroi de séparation (60) ou inclinée par rapport à ladite paroi de séparation (60) de moins de 20°.

5. Réservoir d'huile (40) selon l'une des revendications 2 à 4, dans lequel le canal (62) est en position centrale de la paroi de séparation (60) et ladite paroi de séparation (60) est en forme d'entonnoir.

6. Réservoir d'huile (40) selon les revendications 4 et 5, dans lequel la partie distale (64.1) du conduit (64) est en forme d'entonnoir correspondant à la forme d'entonnoir de la paroi de séparation (60).

7. Réservoir d'huile (40) selon l'une des revendications 1 à 6, dans lequel le conduit (64) comprend une partie proximale (64.2) étant sensiblement parallèle à l'axe principal (R).

8. Réservoir d'huile (40) selon l'une des revendications 1 à 7, dans lequel la partie distale (64.1) du conduit (64) présente au moins 40% d'une étendue totale dudit conduit (64).

9. Réservoir d'huile (40) selon l'une des revendications 1 à 8, dans lequel le conduit (64) présente une section correspondante à au moins 1,2 fois une section du canal (62).

10. Réservoir d'huile (40) selon les revendications 1 à 9, dans lequel le canal (62) comprend une extrémité distale (62.1) formant avec la partie distale (64.1) du conduit (64) un volume tampon (V') à l'intérieur dudit conduit (64), ladite extrémité distale (62.1) du canal (62) et la partie distale (64.1) du conduit (64) forment un deuxième volume (V2) à l'extérieur du conduit (64), et la partie distale (64.1) du conduit (64) forme avec la paroi de séparation (60) un premier volume (V1), ledit premier volume (V1) étant plus petit que le deuxième volume (V2) dans le compartiment inférieur (56).

11. Réservoir d'huile (40) selon les revendications 1 à 10, dans lequel la paroi de séparation (60) et/ou l'extrémité distale (62.1) du canal (62) comprend, en outre, au moins une vanne (60.1) et/ou au moins un clapet anti-retour (62.2) sensible(nt) aux changements de la pesanteur.

12. Turbomachine (2) comprenant :
- une hélice (14) non carénée propulsant un flux d'air entrant (F), ladite hélice (14) comprenant un système à calage variable (52) permettant d'actionner le pas des aubes (28) de l'hélice (14) ;
- un réservoir d'huile (40) pour la lubrification de composants de la turbomachine (2) ;
**caractérisé en ce que** ledit réservoir (40) étant selon l'une des revendications 1 à 11.

13. Turbomachine (2) selon la revendication 12, **caractérisée en ce que** l'arrivée d'huile (66) vers le deuxième compartiment (58) et une sortie d'huile supérieure (72) formant avec le deuxième compartiment (58) un premier circuit fermé (42) destiné à la lubrification et/ou au refroidissement des composants du moteur (3) de la turbomachine (2).

14. Turbomachine (2) selon l'une des revendications 12 ou 13, **caractérisée en ce que** le système à calage variable (52) est un premier système à calage variable (52), et ladite turbomachine (2) comprend, en outre, un redresseur (34) comprenant une pluralité d'aubes statoriques (36) s'étendant depuis un carter fixe (24), ledit redresseur (34) comprenant un deuxième système à calage variable (52), et **en ce que** le départ d'huile (74) est hydrauliquement relié à un deuxième circuit fermé (48) comprenant des composants du premier système (52) et/ou du deuxième système à calage variable (52) de la turbomachine.

## Patentansprüche

1. Ein Öltank (40) für eine Turbomaschine (2), der Folgendes umfasst:
- ein Ölgehäuse (54) mit einer Hauptachse (R) und Wänden (54.1, 54.2, 54.3, 54.4), die eine erste Kammer (56) und eine zweite Kammer (58) begrenzen, die von der ersten Kammer (56) durch eine Trennwand (60) getrennt ist;
- eine Leitung (62), die von der Trennwand (60) zur ersten Kammer (56) führt;
- einen Lufteinlass für gemischtes Öl (66), der sich in der zweiten Kammer (58) befindet;
- einen Ölauslass (74), der aus einem Kanal (64) besteht, der zur ersten Kammer (56) führt;
**dadurch gekennzeichnet, dass**
die Leitung (62) sich in dem Kanal (64) erstreckt, um eine Ölversorgung für den Kanal (64) bereitzustellen und dadurch die Ölversorgung für den Kanal (64) während Flugphasen mit Schwerelosigkeit oder negativer Schwerkraft aufrechtzuerhalten.

2. Der Öltank (40) nach Anspruch 1, wobei die Trennwand (60) in Bezug auf eine Senkrechte zur Hauptachse (R) der Leitung (62) geneigt ist, um Öl zu der Leitung (62) zu leiten.

3. Der Öltank (40) nach Anspruch 2, wobei die Trennwand (60) einen Neigungswinkel (α) in Bezug auf die Senkrechte zur Hauptachse (R) zwischen 10° und 60°, vorzugsweise zwischen 30° und 50°, aufweist.

4. Der Öltank (40) gemäß den Ansprüchen 2 und 3, wobei der Kanal (64) einen distalen Teil (64.1) umfasst, der parallel zu der Trennwand (60) oder um weniger als 20° relativ zu der Trennwand (60) geneigt ist.

5. Der Öltank (40) nach einem der Ansprüche 2 bis 4, wobei die Leitung (62) in einer zentralen Position der Trennwand (60) angeordnet ist und die Trennwand (60) trichterförmig ist.

6. Der Öltank (40) nach den Ansprüchen 4 und 5, wobei der distale Teil (64.1) des Kanals (64) trichterförmig ist und der Trichterform der Trennwand (60) entspricht.

7. Der Öltank (40) nach einem der Ansprüche 1 bis 6, wobei der Kanal (64) einen proximalen Abschnitt (64.2) umfasst, der im Wesentlichen parallel zur Hauptachse (R) verläuft.

8. Der Öltank (40) gemäß einem der Ansprüche 1 bis 7, wobei der distale Teil (64.1) des Kanals (64) mindestens 40 % der Gesamtausdehnung des Kanals (64) umfasst.

9. Der Öltank (40) gemäß einem der Ansprüche 1 bis 8, wobei der Kanal (64) einen Querschnitt aufweist, der mindestens dem 1,2-fachen eines Querschnitts der Leitung (62) entspricht.

10. Der Öltank (40) nach den Ansprüchen 1 bis 9, wobei die Leitung (62) ein distales Ende (62.1) aufweist, das zusammen mit dem distalen Teil (64.1) des Kanals (64) ein Puffervolumen (V') innerhalb des Kanals (64) bildet, wobei das jeweilige distale Ende (62.1) der Leitung (62) und der distalen Teil (64.1) des Kanals (64) ein zweites Volumen (V2) außerhalb des Kanals (64) bilden und der distale Teil (64.1) des Kanals (64) zusammen mit der Trennwand (60) ein erstes Volumen (V1) bildet, wobei das erste Volumen (V1) kleiner ist als das zweite Volumen (V2) in der unteren Kammer (56).

11. Der Öltank (40) gemäß den Ansprüchen 1 bis 10, wobei die Trennwand (60) und/oder das distale Ende (62.1) der Leitung (62) ferner mindestens ein Ventil (60.1) und/oder mindestens ein schwerkraftempfindliches Rückschlagventil (62.2) umfasst.

12. Eine Turbomaschine (2), umfassend:
- eine hüllenlose Schaufel(14), die einen Einlassluftstrom (F) antreibt, wobei die Schaufel (14) ein variables Ventilsteuerungssystem (52) umfasst, das es ermöglicht, die Steigung der Schaufeln (28) des Propellers (14) zu betätigen;
- einen Öltank (40) zum Schmieren von Komponenten der Turbomaschine (2);
**dadurch gekennzeichnet, dass** der Öltank (40) einem der Ansprüche 1 bis 11 entspricht.

13. Die Turbomaschine (2) gemäß Anspruch 12, **dadurch gekennzeichnet, dass** der Öleinlass (66) zur zweiten Kammer (58) und ein oberer Ölauslass (72) zusammen mit der zweiten Kammer (58) einen ersten geschlossenen Kreislauf (42) zum Schmieren und/oder Kühlen der Motorkomponenten (3) der Turbomaschine (2) bilden.

14. Die Turbomaschine (2) gemäß einem der Ansprüche 12 oder 13, **dadurch gekennzeichnet, dass** das variable Ventilsteuerungssystem (52) ein erstes variables Ventilsteuerungssystem (52) ist und die Turbomaschine (2) ferner einen Gleichrichter (34) mit einer Vielzahl von Statorschaufeln (36) umfasst, die von einem feststehenden Gehäuse (24) erstrecken, wobei der Gleichrichter (34) ein zweites variables Ventilsteuerungssystem (52) umfasst, und dass der Ölauslass (74) hydraulisch mit einem zweiten geschlossenen Kreislauf (48) verbunden ist, der Komponenten des ersten (52) und/oder zweiten variablen Ventilsteuerungssystems (52) der Turbomaschine umfasst.

## Claims

1. Oil tank (40) for a turbomachine (2), comprising:
- an enclosure (54) for the oil, having a main axis (R), and with walls (54.1, 54.2, 54.3, 54.4) delimiting a first compartment (56) and a second compartment (58) separated from the first compartment (56) by a separation wall (60);
- a channel (62) extending into the first compartment (56), from the separation wall (60);
- an oil inlet (66) mixed with air, arranged on the second compartment (58);
- an oil outlet (74) comprising a conduit (64) extending and opening into the first compartment (56);
**characterized in that** the channel (62) extends inside the conduit (64), so as to ensure oil priming of the conduit (64) and thus maintain an oil supply to the conduit (64) during zero or negative gravity flight phases.

2. The oil tank (40) according to claim 1, wherein the separation wall (60) is inclined relative to a perpendicular to the main axis (R), towards the channel (62) so as to guide the oil towards said channel (62).

3. The oil tank (40) according to claim 2, wherein the dividing wall (60) has with the perpendicular to the main axis (R) an angle of inclination (α) of between 10° and 60°, more preferably of between 30° and 50°.

4. The oil tank (40) according to claims 2 and 3, wherein the conduit (64) comprises a distal part (64.1) parallel to the separation wall (60) or inclined relative to said separation wall (60) by less than 20°.

5. The oil tank (40) according to any one of claims 2 to 4, wherein the channel (62) is in a central position of the separation wall (60) and said separation wall (60) is funnel-shaped.

6. The oil tank (40) according to claims 4 and 5, wherein the distal part (64.1) of the conduit (64) is funnel-shaped corresponding to the funnel shape of the separation wall (60).

7. The oil tank (40) according to any one of claims 1 to 6, wherein the conduit (64) comprises a proximal part (64.2) being substantially parallel to the main axis (R).

8. The oil tank (40) according to one of claims 1 to 7, wherein the distal part (64.1) of the conduit (64) has at least 40% of a total extent of said conduit (64).

9. The oil tank (40) according to one of claims 1 to 8, wherein the conduit (64) has a section corresponding to at least 1.2 times a section of the channel (62).

10. The oil tank (40) according to claims 1 to 9, wherein the channel (62) comprises a distal end (62.1) forming with the distal part (64.1) of the conduit (64) a buffer volume (V') inside said conduit (64), said distal end (62.1) of the channel (62) and the distal part (64.1) of the conduit (64) form a second volume (V2) outside the conduit (64), and the distal part (64.1) of the conduit (64) forms with the separation wall (60) a first volume (V1), said first volume (V1) being smaller than the second volume (V2) in the lower compartment (56).

11. The oil tank (40) according to claims 1 to 10, wherein the separation wall (60) and/or the distal end (62.1) of the channel (62) further comprises at least one valve (60.1) and/or at least one non-return valve (62.2) responsive to changes in gravity.

12. Turbomachine (2) comprising:
- an unducted propeller (14) propelling an incoming air flow (F), said propeller (14) comprising a variable pitch system (52) for actuating the pitch of the blades (28) of the propeller (14) ;
- an oil tank (40) for lubricating components of the turbomachine (2);
**characterized in that** said oil tank (40) is according to any one of claims 1 to 11.

13. Turbomachine (2) according to claim 12, **characterized in that** the oil inlet (66) to the second compartment (58) and an upper oil outlet (72) form with the second compartment (58) a first closed circuit (42) intended for the lubrication and/or cooling of the components of the engine (3) of the turbomachine (2).

14. Turbomachine (2) according to one of claims 12 or 13, **characterized in that** the variable timing system (52) is a first variable timing system (52), and said turbomachine (2) further comprises a rectifier (34) comprising a plurality of stator vanes (36) extending from a fixed casing (24) , said rectifier (34) comprising a second variable timing system (52) , and **in that** the oil outlet (74) is hydraulically connected to a second closed circuit (48) comprising components of the first system (52) and/or of the second variable timing system (52) of the turbomachine.
